# EUROPEAN PATENT SPECIFICATION

(11) **EP 2 545 285 B1**
(45) Date of publication and mention of the grant of the patent: **28.12.2016**
(21) Application number: 11708181.0
(22) Date of filing: 08.03.2011
(51) Int. Cl.: F04D 29/52, F04D 29/54

(54) **AXIAL COOLING FAN SHROUD**
HAUBE FÜR EINEN AXIALLÜFTER
TUYÈRE DE VENTILATEUR DE REFROIDISSEMENT AXIAL

(30) Priority: 08.03.2010 US 311492 P
(43) Date of publication of application: 16.01.2013
(73) Proprietor: Robert Bosch GmbH, 70469 Stuttgart (DE)
(72) Inventor: COTÉ, Raymond, F., Dover MA 02030 (US)
(74) Representative: DREISS Patentanwälte PartG mbB
(86) International application number: PCT/US2011/027508
(87) International publication number: WO 2011/112555

(56) References cited:
- US-A- 5 106 270
- US-A- 5 649 587

## Description

### BACKGROUND

The present invention relates to cooling fan shrouds and more particularly to cooling fan shrouds for use in axial-flow fan assemblies to cool engines, as defined in the preambles of claims 1 and 12. Such shrouds are known eg from US 5106270.

A typical cooling fan assembly for drawing air through one or more heat exchangers includes a fan, a motor for driving the fan, and a shroud. The shroud serves at least three purposes: a) supporting the motor and fan, b) attaching the assembly to the heat exchanger, and c) guiding the cooling air from the downstream face of the heat exchanger into the fan.

US 5,106,270 A relates to an air supply system having multi-cylinder, two-stage air compressor including a pair of low pressure cylinders and a high pressure cylinder. Furthermore, it is disclosed a skirted protective housing including an air directing shroud. The housing is welded box - like T-shaped structure. The housing is bolted to the body of the air compressor. The upper-comers of the housing comprise a plurality of gridded rectangular outlet openings which effectively allow the heat to be quickly dissipated by both natural and transferred convection, and forced air cooling.

US 5,649,587 relates to a fan shroud and receptacle arrangement for use adjacent a vehicle radiator and around one or more engine cooling fans. The arrangement includes a shaped hollow body. Oppositely disposed recesses are formed in the front and rear faces to form a wall for dividing the hollow body into two or more internal chambers.

### SUMMARY

Fan efficiency and fan noise production are greatly influenced by the quality of the airflow into the fan. Two factors affecting this quality are flow uniformity and flow orientation. A more uniform flow pattern is desirable because typical cooling fans for this type of application are designed for a single inflow condition. Any non-uniformities in flow differing from this condition result in fan operation away from the design point and consequent operational inefficiency. Inflow non-uniformities also result in unsteady blade loading, which creates noise. Axial flow into the fan is equally desirable in order to more closely correspond with typical fan design methods, which assume such a condition. Flow streams other than axial therefore represent further losses in efficiency. A fan shroud configured for optimal air guidance for improved fan efficiency and reduced noise should therefore promote uniform and axial flow from the downstream face of the heat exchanger into the fan.

The present invention provides for an improved airflow structure enabling a more uniform and axial flow stream from the heat exchanger into the fan inlet, therefore allowing for more efficient fan operation while minimizing fan noise.

In one embodiment of a fan shroud for a cooling fan assembly having a fan that is rotatable about an axis of rotation and that defines a downstream direction along the axis of rotation, the fan shroud includes a barrel for containing the fan. The barrel is concentric with the axis of rotation and further includes a base portion. A plenum includes a plenum body extending radially from the base portion. The plenum body defines at least one edge of length L1. A skirt extends proximate the at least one edge of length L1 and substantially parallel to the axis of rotation. An interface joins the at least one edge of length L1 and the skirt and has a length L1. The interface comprises an underside having a transition surface of a length less than length L 1.

In another embodiment of a cooling fan assembly for facilitating the transfer of heat through a heat exchanger, the cooling fan assembly includes a fan rotatable about an axis of rotation and defining a downstream direction along the axis of rotation. The fan is positioned downstream of the heat exchanger and further includes a plurality of fan blades. A fan shroud includes a barrel concentric with the axis of rotation and encircling the plurality of fan blades. The barrel defines a barrel radius and has a base portion. A plenum includes a plenum body and at least one skirt. The plenum body is coupled to the barrel and has a substantially rectangular planform viewed in the upstream direction. The plenum body defines an effective surface monotonically increasing in upstream distance from the base portion. The at least one skirt extends substantially parallel to the axis of rotation and is coupled to the plenum body. The at least one skirt includes a substantially rectilinear upstream border having a first end and a second end. The plenum defines for the at least one skirt a cross section C through the axis of rotation and normal to the skirt, a distance D1 between cross section C and the first end of the upstream border, a distance D2 between cross section C and the second end of the upstream border, and a distance D3, wherein D3 is equal to the lesser of D1 and D2, or is equal to D1 if D1 equals D2. The plenum also defines a plane P1 parallel to and offset from cross section C an offset distance DP1 less than D3. The plenum also defines a plane P2 parallel to and offset from cross section C on the opposite side of cross section C from plane P1 an offset distance DP2 less than D3. The plenum also defines a plane P3 perpendicular to both cross section C and the axis of rotation and containing a point on the upstream border, a plane P4 perpendicular to plane P3 and cross section C and containing a point located on cross section C and on the plenum body, a plane P5 parallel to and offset from cross section C an offset distance equal to D3, and a plane P6 parallel to and offset from cross section C on the opposite side of cross section C from plane P5 an offset distance equal to D3. A volume V1 is defined as enclosed by planes P1, P2, P3, P4 and the effective surface. A volume V2 is defined as enclosed by planes P1, P3, P4, P5 and the effective surface. A volume V3 is defined as enclosed by planes P2, P3, P4, P6 and the effective surface. An average cross sectional area A1 is defined as V1/(DP1+DP2). An average cross sectional area A2 is defined as (V2+V3)/((D3-DP1)+(D3-DP2). A1 is less than A2.

Other aspects of the invention will become apparent by consideration of the detailed description and accompanying drawings.

### BRIEF DESCRIPTION OF THE DRAWINGS

Fig. 1 is a downstream perspective view of one type of conventional fan shroud.
Fig. 2 is an upstream perspective view of the fan shroud of Fig. 1.
Fig. 3 is a downstream perspective view of a second type of conventional fan shroud.
Fig. 4 is an upstream perspective view of the fan shroud of Fig. 3.
Fig. 5 is a downstream perspective view of a fan assembly embodying the present invention.
Fig. 6 is an upstream perspective view of the fan assembly of Fig. 5.
Fig. 6A is a partial section view taken along line 6A-6A of Fig. 6.
Fig. 6B is a partial section view taken along line 6A-6A of Fig. 6.
Fig. 7 is an upstream plan view of a plenum of a fan shroud showing an alternative barrel position.
Fig. 8 is a downstream perspective view of the fan assembly of Fig. 5 shown with reference planes and dimensions added for descriptive purposes.
Fig. 9A is a downstream plan view of the fan shroud of Fig. 8.
Fig. 9B is a side view of the fan shroud of Fig. 8.
Fig. 9C is a partial section view taken along line 9C-9C of Fig. 9B.
Fig. 10A is an upstream perspective view of a fan shroud showing a surface deviation.
Fig. 10B is a partial cross sectional view of the fan shroud of Fig. 10A.
Fig. 10C is a partial cross sectional view of an effective surface area of the fan shroud of Fig. 10B.
Fig. 11 is an upstream perspective view of the fan shroud of Fig. 8.
Fig. 11A is view of certain cross sectional areas of the fan shroud of Figs. 8 and 11.
Fig. 12 is an upstream perspective view of the fan shroud of Fig. 1.
Fig. 12A is view of certain cross sectional areas of the fan shroud of Fig. 1.
Fig. 13 is an upstream perspective view of the fan shroud of Fig. 3.
Fig. 13A is view of certain cross sectional areas of the fan shroud of Fig. 3.
Fig. 14 is a perspective view of a fan assembly with multiple fans in accordance with the present invention.
Fig. 14A is a plan view of the fan shroud of Fig. 14.
Fig. 14B is a side view of the fan shroud of Fig. 14A.

### DETAILED DESCRIPTION

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways.

Typically, cooling fan shrouds include a plenum having one or more edges for contact with the surface of a heat exchanger, and a downstream circular barrel joined to the plenum that houses a cooling fan for drawing air through the shroud. More specifically, cooling fan shrouds may be conventionally characterized as having either a constant cone angle configuration or a constant wall height configuration.

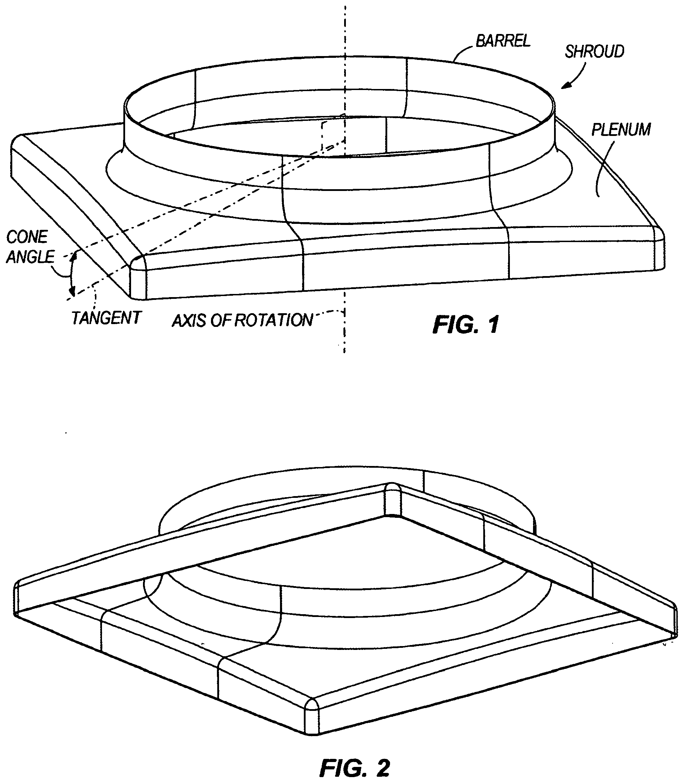

Referring to Fig. 1, a shroud with a conventional constant cone angle design includes a plenum with a top surface extending from the barrel with a somewhat conical configuration, which is generally defined by a cone angle formed between a line tangent to the top surface and a line perpendicular to the axis of rotation. This cone angle is substantially constant in the azimuthal direction. A constant cone angle design has an advantage in that an overall high-volume plenum can be created through use of a small cone angle. A higher plenum volume improves the ability of the fan to draw air through the heat exchanger. The underside of a conventional constant cone angle design is shown in Fig. 2.

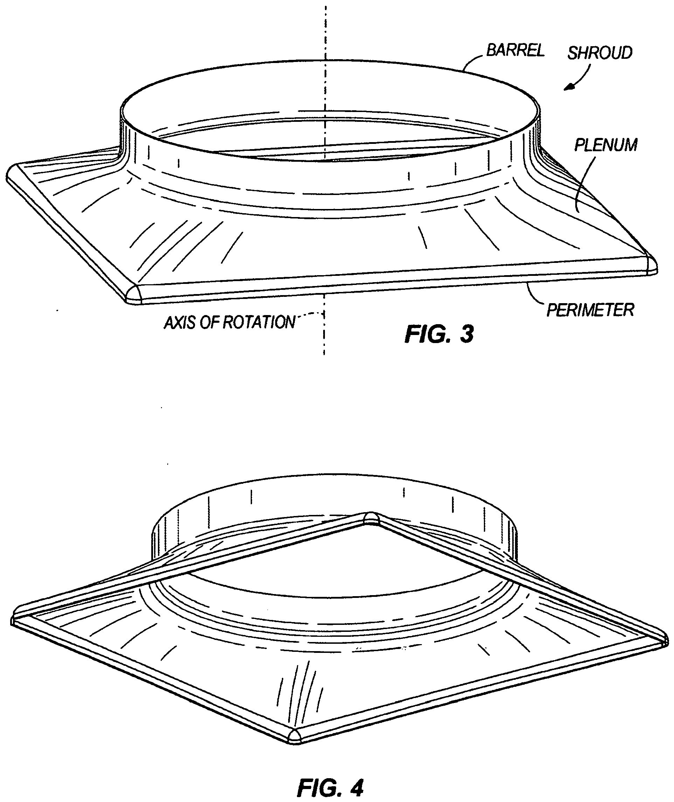

Referring to Fig. 3, a shroud with a conventional constant wall height design includes a plenum with a top surface configured such that in regions where the barrel is close to the shroud perimeter, the plenum surface adjacent to the barrel is more steeply angled than the surrounding surface, creating a more axial and uniform flow into the fan. An underside of the conventional constant wall height design is shown in Fig. 4. An improvement may be made to either configuration or to any fan shroud generally to enhance the air flow into the fan, as hereinafter described.

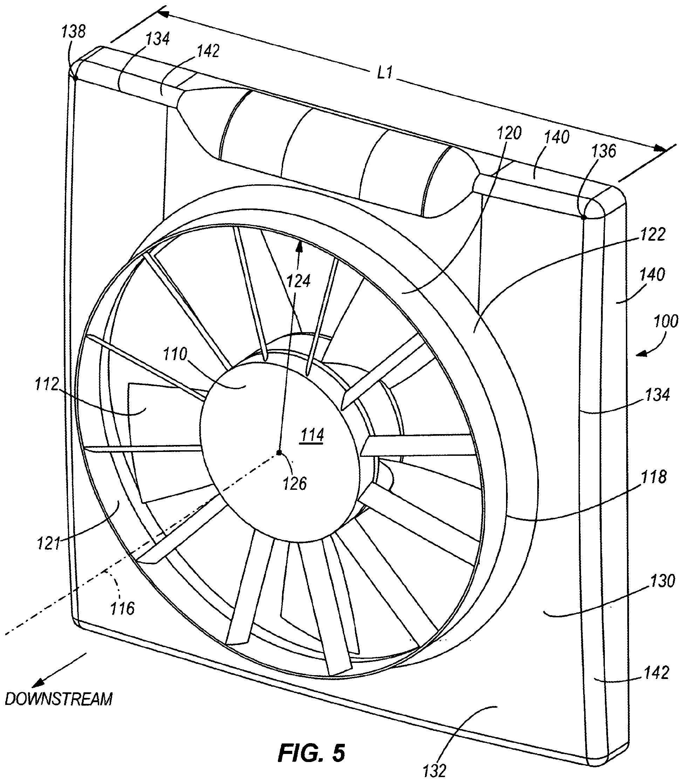

Fig. 5 illustrates an axial cooling fan assembly including a fan shroud 100 surrounding an axial fan 110. The fan 110 has one or more fan blades 112 coupled to a hub 114 rotating about an axis of rotation 116 for drawing air through a heat exchanger (not shown). A downstream direction along the axis of rotation 116 is defined such that the fan 110 is located downstream of the heat exchanger. The fan shroud is preferably constructed of plastic, preferably as an injection molded plastic part.

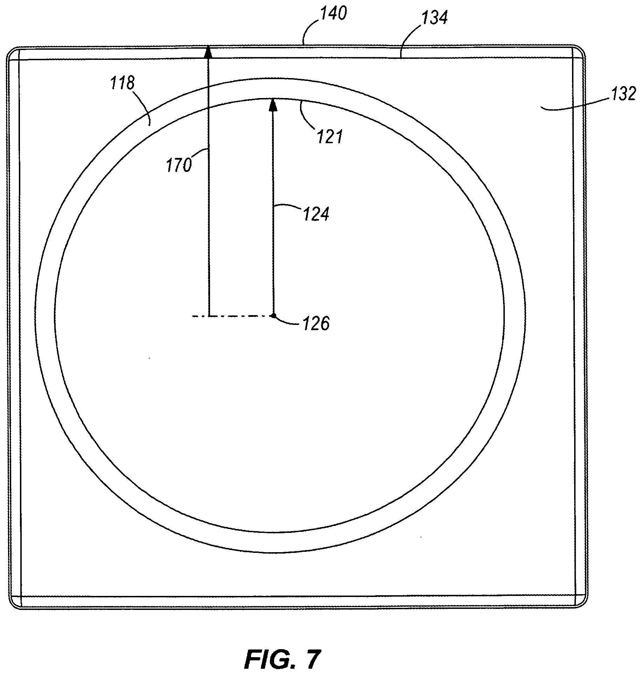

The fan shroud 100 includes a barrel 118 and a plenum 130. The barrel 118 generally encircles and contains the axial fan 110 and is concentric with the axis of rotation 116. The barrel 118 includes a housing portion 120 downstream of a base portion 122 that is coupled to the plenum 130. The housing portion 120 includes an inner surface 121. Referring to Figs. 5 and 7, the barrel also defines a barrel radius 124 extending from a barrel midpoint 126 coincident with the axis of rotation, to inner surface 121 of the housing portion 120.

The plenum 130 includes a plenum body 132 radially extending from the base portion 122. The plenum body 132 defines one or more edges 134, each edge 134 including a first end 136 and a second end 138. The edges 134 generally have a length L1, shown in Fig. 5, coinciding with the distance between the first end 136 and the second end 138. The plenum body 132 extends generally perpendicular to the axis of rotation 116. Alternatively, the plenum body 132 can be angled from the base portion 122 such that the edge 134 is positioned further upstream than base portion 122. If so angled, it is not necessary that the plenum body 132 be angled from the base portion 122 at a substantially constant angle. A skirt 140 extends proximate an edge 134 and in a substantially parallel direction to the axis of rotation 116.

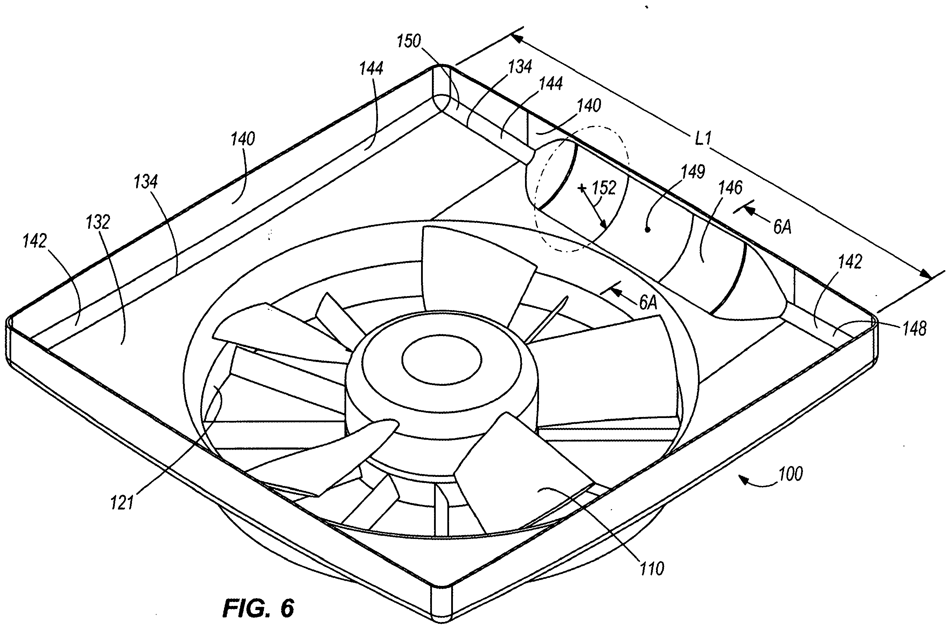

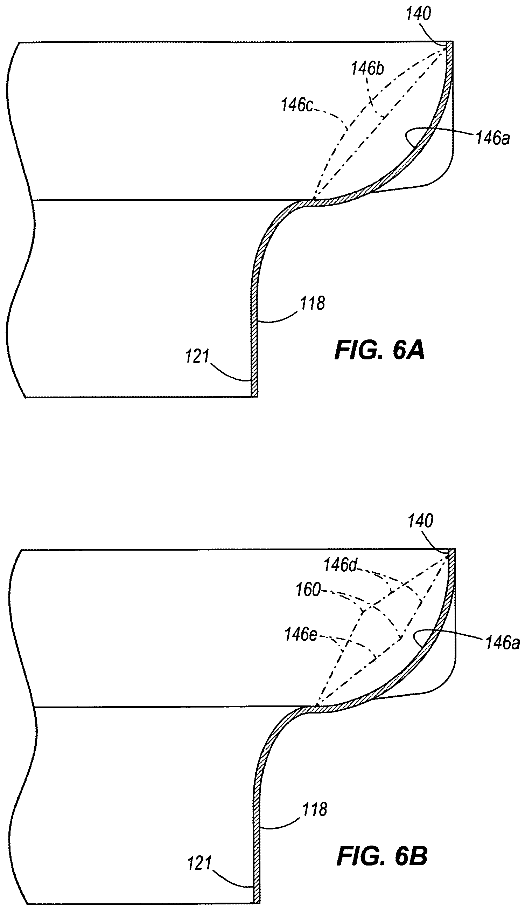

The plenum 130 also includes an interface 142 joining a respective edge 134 with a respective skirt 140. The interface 142 will preferably be of length L1 in correspondence with an adjacent edge 134. Referring to Fig. 6, the interface 142 includes an underside 144. More specifically, the underside 144 includes a transition surface 146. The transition surface 146 is distinguished from a first segment 148 of the underside 144, located on one side of the transition surface 146, and a second segment 150 of the underside 144, located on the other side of the transition surface 146. As shown, the first segment 148 and the second segment 150 provide a generally smooth surface between the skirt 140 and the edge 134. The transition surface 146 has a length less than length L1 of the interface 142 and preferably has a length between about 0.25 and about 1.5 of the barrel radius 124. The transition surface 146 can be positioned anywhere within the interface 142 but a center 149 of the transition surface 146 is preferably located at the midpoint of interface 142, or, alternatively, substantially aligned with barrel midpoint 126. In the embodiment shown in Figs. 6, 6A, and 6B, the transition surface 146 is in the form of a concavity 146a and can be any of several radii. More specifically, a radius 152 of the concavity 146a is greater than a corresponding radius of both the first segment 148 and the second segment 150.

Other embodiments of the transition surface 146 are contemplated. For example, as shown in Fig. 6A, the transition surface 146 can be in the form of a linearity 146b or a convexity 146c (shown in phantom). In still other embodiments, as shown in Fig. 6B, the transition surface 146 can be in the form of a first linear surface 146d forming a vertex 160 with a second linear surface 146e (shown in phantom). The vertex 160 can be positioned toward or away from the axis of rotation 116 (see Fig. 5). In still other embodiments, the transition surface 146 can also be in the form of a plurality of steps (not shown). In the illustrated embodiments, plenum 130, which includes the plenum body 132, the skirt 140, and the interface 142 with a transition surface 146, has a substantially uniform thickness regardless of the specific manufacturing method. Such an interface 142, including the transition surface 146, allows for smoother flow of incoming air moving adjacent to skirt 140 and into axial fan 110, increasing fan efficiency and reducing fan noise as previously discussed.

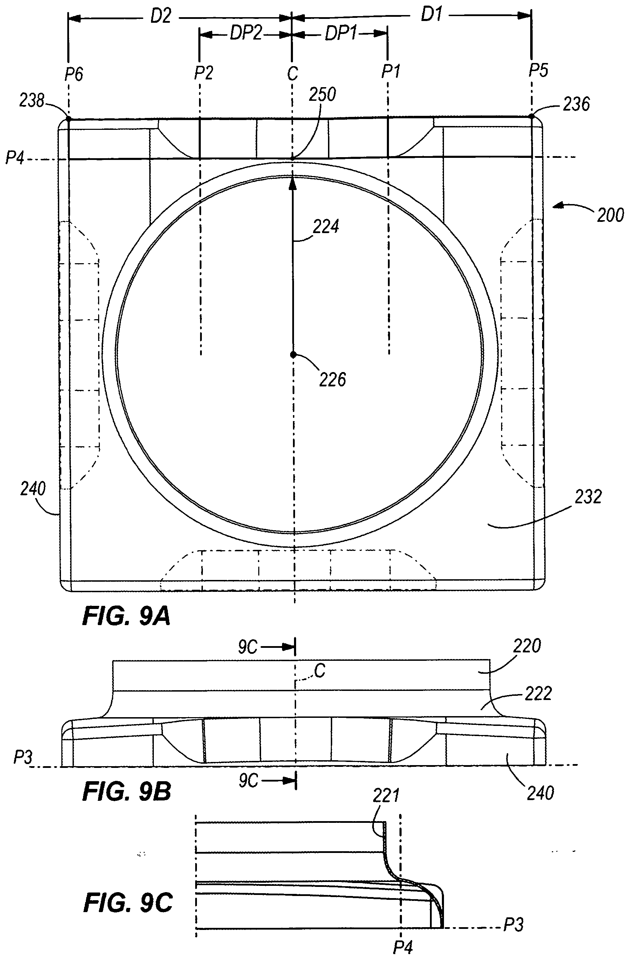

Although this embodiment was illustrated and described in Figs. 5-6 in terms of a single transition surface 146, no such limitation is to be implied and any or all interfaces 142, skirts 140, and edges 134 defined by the plenum body 132 may be so configured. In addition, a particular edge 134 may have a defined length of magnitude more or less than that of length L1. For example, one edge 134 may have a length L1 and another edge 134 may have a length L2, where L2 is a different length than L1. In all other respects the above description is applicable to such a configured fan shroud and one, some, or all of edges 134 with respective length L1, length, L2, etc., may include an interface 142 with an underside 144 having a transition surface 146 joining the edge 134 with a respective skirt 140 as herein described. For example, a second edge 134 with a length L1 (or length L2) may be joined to a second skirt 140 that extends proximate the second edge 134 with a second interface 142 preferably of length L1 (or length L2) having an underside 144 with a transition surface 146, a first segment 148 located on one side of the transition surface 146, and a second segment 150 located on the other side of the transition surface 146. The transition surface 146 of each such underside 144 has a length less than length L1 (or length L2) of the respective interface 142. The transition surface 146 of each underside can have a length as previously specified. Further, the transition surface 146 of each underside 144 can be in the form of any embodiment previously specified. Fig. 9A shows a configuration having transition surfaces 146 for all four skirts illustrated, three of which are depicted in phantom. As with the above description, the transition surface 146 can be positioned anywhere within the respective interface 142 but a center 149 of the transition surface 146 is preferably located at the midpoint of the respective interface 142, or, alternatively, substantially aligned with barrel midpoint 126.

The barrel 118 can be variously positioned with respect to the plenum body 132, as shown in Fig. 7. In a configuration such as shown in Fig. 7, the barrel midpoint 126 coincident with the axis of rotation need not be equidistant to the midpoint of each plenum edge 134. Moreover, the ratio between the barrel radius 124 and the distance of a line 170 proceeding from the barrel midpoint 126 perpendicular to the axis of rotation and to the outermost extent of skirt 140 as shown, for at least one plenum edge 134, can preferably range from approximately 0.70 to 0.88.

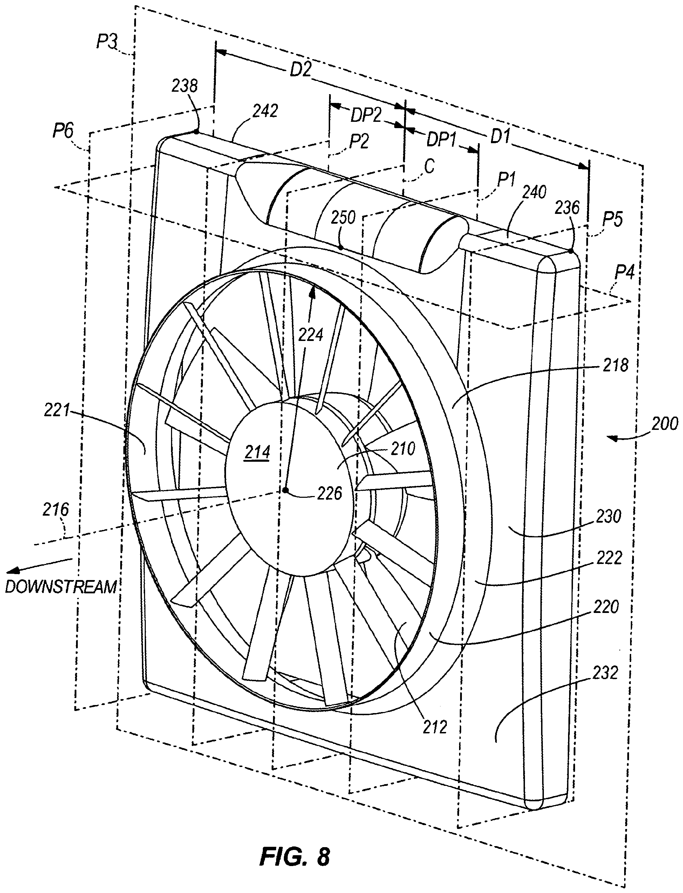

The following description utilizes additional reference numbers to express various geometric relationships within the cooling fan assembly previously described and as shown in Figs. 5-7. Referring to Figs. 8, 9A, 9B, and 9C, an axial cooling fan assembly includes a fan shroud 200 surrounding an axial fan 210. Fan 210 has one or more fan blades 212 coupled to a hub 214 rotating about an axis of rotation 216 for drawing air through a heat exchanger, not shown. A downstream direction along the axis of rotation 216 is defined such that the fan 210 is located downstream of the heat exchanger.

The fan shroud 200 includes a barrel 218 and a plenum 230. The barrel 218 generally encircles and contains the axial fan 210 and is concentric with the axis of rotation 216. The barrel 218 includes a housing portion 220 downstream of a base portion 222 that is coupled to the plenum 230. The housing portion 220 includes an inner surface 221. The barrel also defines a barrel radius 224 extending from a barrel midpoint 226 coincident with the axis of rotation to inner surface 221 of the housing portion 220.

The plenum 230 includes a plenum body 232 radially extending from the base portion 222 and having a substantially rectangular planform viewed from the upstream direction. The plenum body 232 can be angled from the base portion 222 such that at a further radius from the axis of rotation 216, the plenum body 232 is positioned further upstream. The plenum 230 also includes at least one skirt 240 coupled to the plenum body 232 and extending in a direction substantially parallel to the axis of rotation 216. The skirt 240 includes a substantially rectilinear upstream border 242 having a first end 236 and a second end 238.

A cross section C is defined parallel to the axis of rotation 216 and passes through barrel midpoint 226. Cross section C is also substantially normal to skirt 240 through which it passes. Cross section C is not otherwise limited to a particular orientation nor is it dependent upon the position of barrel 218 with respect to the plenum body 232. A distance D1 is defined between cross section C and first end 236 and a distance D2 is defined between cross section C and second end 238. A distance D3 is defined as the lesser value of D1 and D2, or if D1 equals D2, D3 is equal to either D1 or D2. A plane P1 is defined as parallel to and offset from cross section C. Preferably, plane P1 is offset a distance DP1 equal to between about 0.125 of barrel radius 224 and about 0.75 of barrel radius 224, but less than the value of D3. A plane P2 is defined as parallel to and offset from cross section C, on the opposite side of cross section C from plane P1. Preferably, plane P2 is offset a distance DP2 equal to between about 0.125 of barrel radius 224 and about 0.75 of barrel radius 224, but less than the value of D3. The sum of DP1 and DP2 is preferably within a range having a lower limit of about 0.25 of barrel radius 224 and an upper limit of about 1.5 of barrel radius 224. A plane P3 is defined as perpendicular to cross section C and contains a point that is on upstream border 242 of skirt 240. A plane P4 is perpendicular to plane P3 and perpendicular to cross section C and contains a point 250 on cross section C on the plenum body 232. Point 250 is preferably located a distance from the axis of rotation 216 at least a multiple of 1.1 of barrel radius 224. A plane P5 is defined as parallel to and offset from cross section C. Preferably, plane P5 is offset a distance equal to D3. A plane P6 is defined as parallel to and offset from cross section C on the opposite side of cross section C from plane P5. Preferably, plane P6 is offset a distance equal to D3.

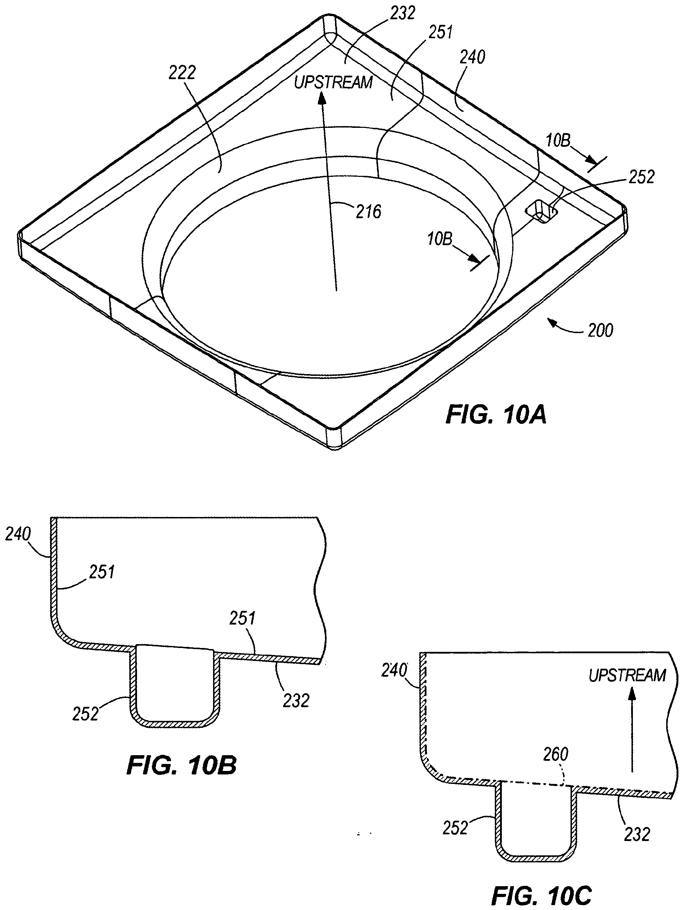

Referring to Figs. 10A and 10B, an upstream surface 251 is defined as the surface of the plenum 230 located on the upstream side of plenum body 232 and continuous with the surface of skirt 240 up to the upstream border 242. Generally, the upstream surface 251 monotonically increases in distance in a direction upstream from base portion 222. By monotonically increasing, the upstream surface 251 either increases or at least does not decrease in distance from base portion 222 in the upstream direction. Fan shroud 200, however, may include one or more surface deviations 252 departing from the monotonically increasing upstream surface 251. In Fig. 10C, an effective surface 260 is defined and shown as overlaid onto upstream surface 251. Referring to Fig. 10C, the effective surface 260 represents a surface equal to upstream surface 251 in the absence of a surface deviation 252, and equal to a monotonically increasing surface in the presence of a surface deviation 252. Therefore, effective surface 260 accounts for any surface deviations present in the fan shroud 200 in order to preserve a monotonically increasing reference surface.

With the aforementioned geometry, a volume V1 is defined as a volume enclosed by plane P1, plane P2, plane P3, plane P4, and effective surface 260. A volume V2 is defined as enclosed by plane P1, plane P3, plane P4, plane P5, and effective surface 260. A volume V3 is defined as enclosed by plane P2, plane P3, plane P4, plane P6, and effective surface 260. An average cross sectional area A1 is defined as volume V1 divided by the sum of offset distance DP1 and offset distance DP2, or V1/(DP1+DP2). An average cross sectional area A2 is defined as volume V2 plus volume V3 divided by the sum of distance D3 minus offset distance DP1 plus the distance D3 minus offset distance DP2, or (V2+V3)/((D3-DP1)+(D3-DP2)).

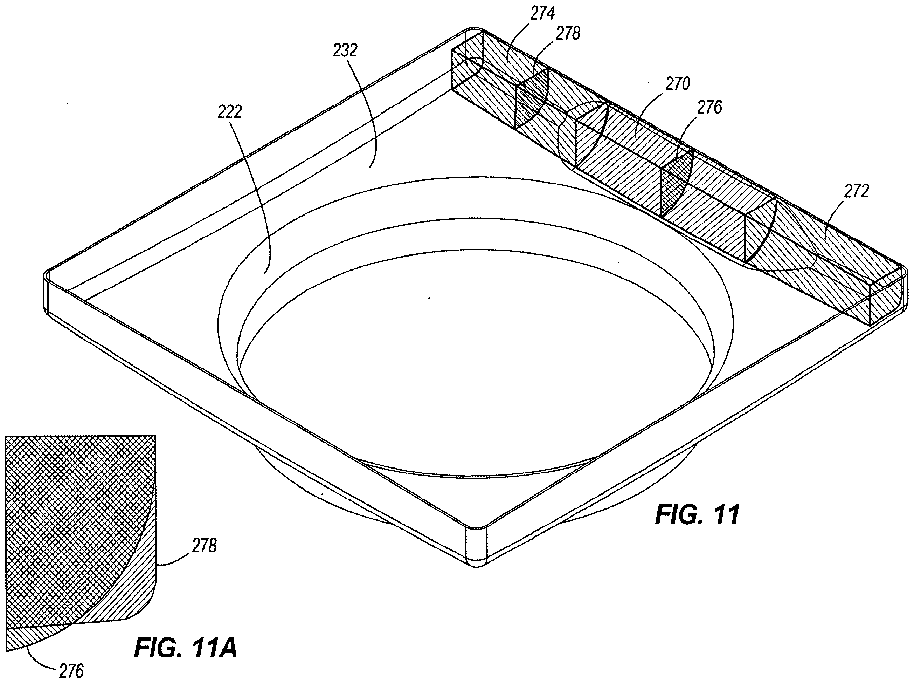

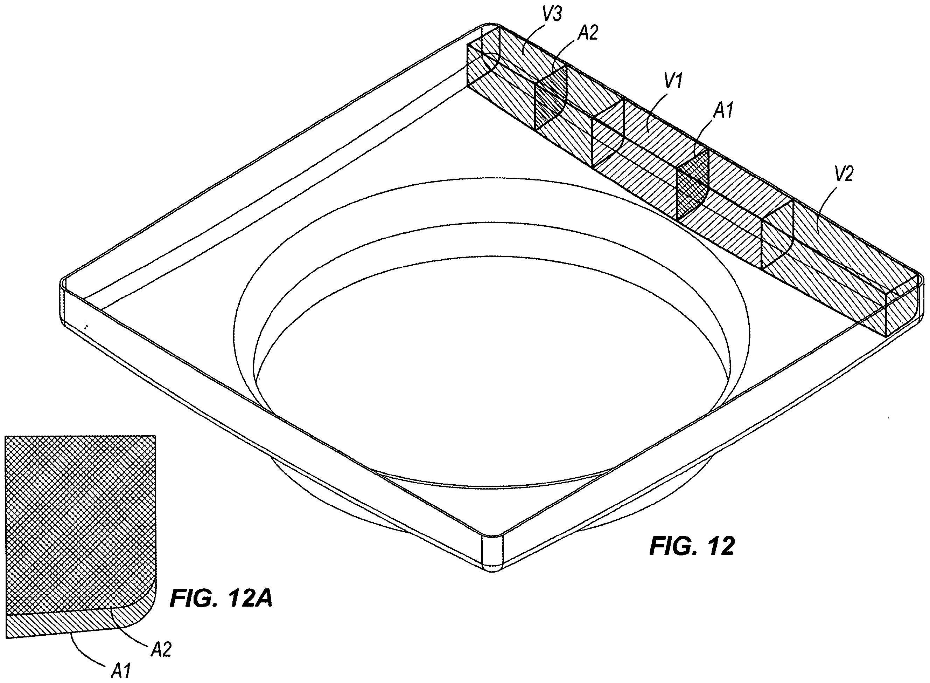

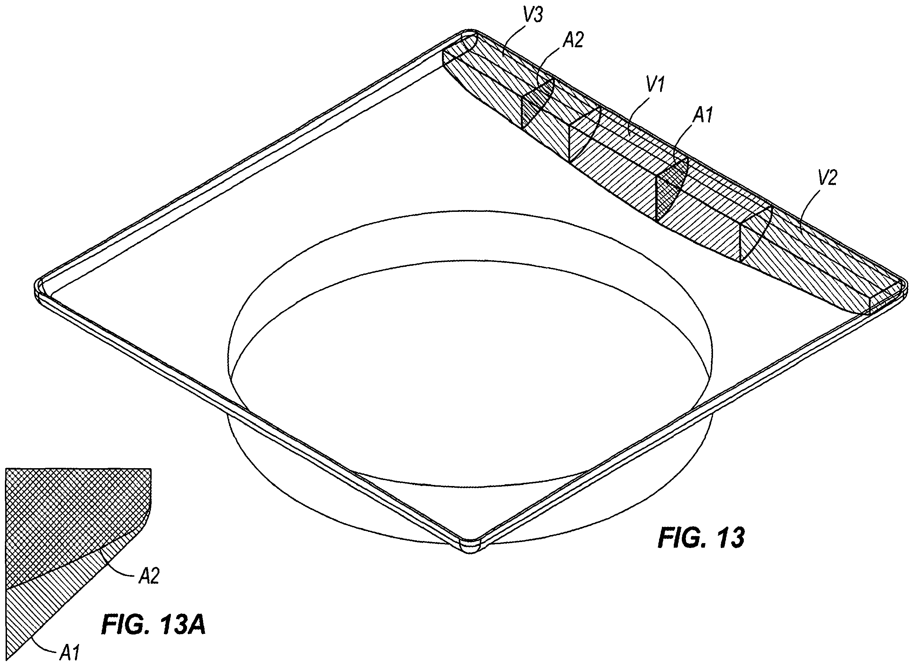

As a result of the configuration of the axial cooling fan assembly, and in particular the fan shroud 200 as previously described, the average cross sectional area A1 will be less than the average cross sectional area A2. This is shown visually in Figs. 11 and 11A, in which shaded volume 270, defined as previously described, represents volume V1, shaded volume 272 represents volume V2, and shaded volume 274 represents volume V3. The average cross sectional area calculated and depicted as area 276 is of a lesser value than the average cross sectional area calculated and depicted as area 278, as illustrated in Fig. 11A. The areas 276, 278, are representative of average areas and no significance should be placed on their precise position in Fig. 11. For comparison, Figs. 12 and 12A show a corresponding illustration of such volumes and areas as described above for the conventional fan shroud of Fig. 1, and Figs. 13 and 13B show a corresponding illustration of these volumes and areas for the conventional fan shroud of Fig. 3. Figs. 12A and 13A in particular illustrate that area A1 is generally greater than area A2 for the conventional fan shrouds.

Though this embodiment was illustrated and described in Figs. 8-11 in terms of a single cross section relative to a single skirt 240, no such limitation is to be implied. For example, separate cross sections, planes, and other parameters described above may be similarly defined and positioned with respect to one, some, or all of skirts 240 of a fan shroud 200, resulting in volumes and cross sectional areas as previously described for each skirt 240. Also as previously described and as illustrated in Fig. 7, the barrel 218 can be variously positioned with respect to the plenum body 232, in which case distance D1 is not equal to distance D2, which will be consequently reflected in the application of distance D3. In addition, the preceding description is applicable to embodiments beyond those disclosed in Figs. 6A-6B.

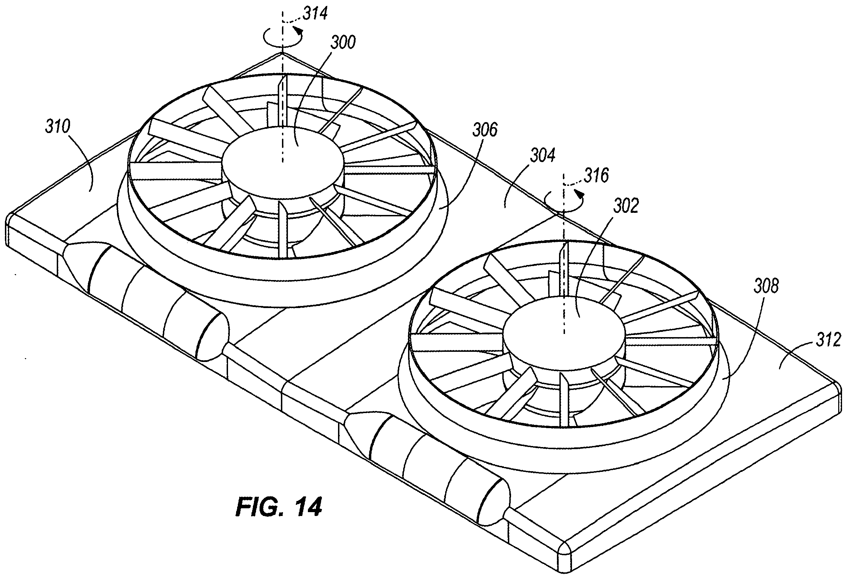

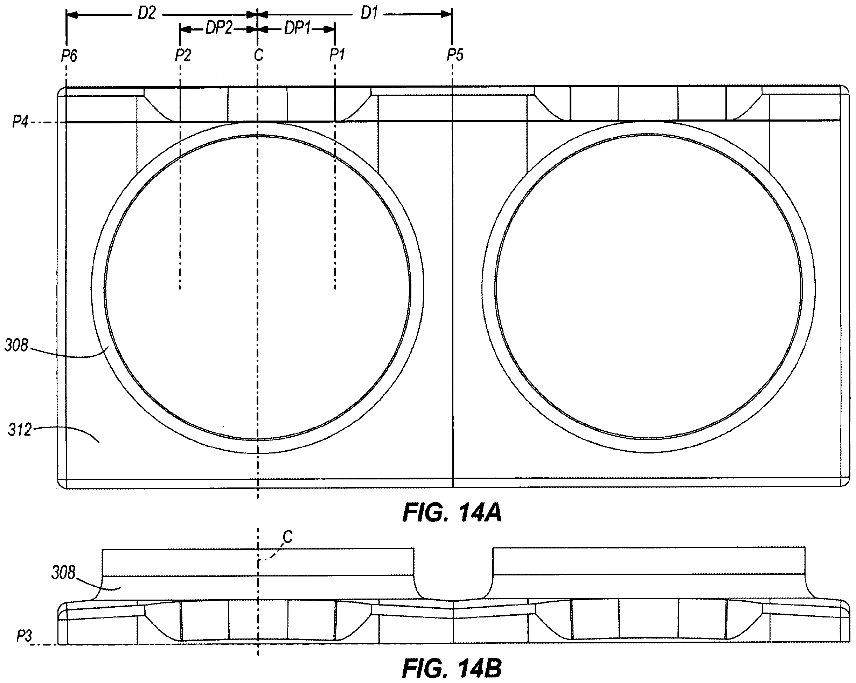

The above descriptions are equally applicable for axial cooling fan assemblies having multiple fans 300, 302, as shown in Fig. 14. In this configuration, a plenum body 304 transitions into two barrels 306, 308 and defines two fan shroud sections 310, 312. Barrels 306, 308 contain the fans 300, 302 and are concentric with axes of rotation 314, 316 about which fans 300, 302 rotate, respectively. In such a circumstance, each fan shroud section 310, 312 is analyzed separately as previously described. For example, Figs. 14A and 14B show a plan view and side view, respectively, of a dual fan configuration with a cross section, planes, and other parameters similar to Figs. 9A and 9B and as previously described. More than two fans and two fan shroud sections may also be contemplated and analyzed in this way.

Various features and advantages of the invention are set forth in the following claims.

## Claims

1. A cooling fan assembly for facilitating the transfer of heat through a heat exchanger, the cooling fan assembly comprising:
a fan (110; 210; 300) rotatable about an axis of rotation (116; 216) and defining a downstream direction along the axis of rotation (116; 216), wherein the fan (110; 210; 300) is positionable downstream of the heat exchanger, the fan (110; 210; 300) further including a plurality of fan blades (112; 212); and
a fan shroud (100; 200) including:
a barrel (118; 218; 306) concentric with the axis of rotation (116; 216) and encircling the plurality of fan blades (112; 212), the barrel (118; 218; 306) defining a barrel radius (124; 224) and having a base portion (122; 222); and
a plenum (130; 230) including a plenum body (132; 232; 304) and at least one skirt (140; 240),
**characterized in**
the plenum body (132; 232; 304) coupled to the barrel (118; 218; 306) and having a substantially rectangular planform viewed in the upstream direction, the plenum body (132; 232; 304) defining an effective surface (260) monotonically increasing in upstream distance from the base portion (122; 222), the at least one skirt (140; 240) extending substantially parallel to the axis of rotation (116; 216) and coupled to the plenum body (132; 232; 304), the at least one skirt (140; 240) including a substantially rectilinear upstream border (242) having a first end (136; 236) and a second end (138; 238), and wherein the plenum (130; 230) defines for the at least one skirt (140; 240):
a cross section C through the axis of rotation (116; 216) and normal to the skirt (140; 240);
a distance D1 between cross section C and the first end (136; 236) of the upstream border (242), and a distance D2 between cross section C and the second end (138; 238) of the upstream border (242);
a distance D3, wherein D3 is equal to the lesser of D1 and D2, or is equal to D1 if D1 equals D2;
a plane P1 parallel to and offset from cross section C an offset distance DP1 less than D3;
a plane P2 parallel to and offset from cross section C on the opposite side of cross section C from plane P1 an offset distance DP2 less than D3;
a plane P3 perpendicular to both cross section C and the axis of rotation (116; 216) and containing a point on the upstream border (242);
a plane P4 perpendicular to plane P3 and cross section C and containing a point (250) located on cross section C and on the plenum body (232); a plane P5 parallel to and
offset from cross section C an offset distance equal to D3; and
a plane P6 parallel to and offset from cross section C on the opposite side of cross section C from plane P5 an offset distance equal to D3,
wherein a volume V1 is defined as enclosed by planes P1, P2, P3, P4 and the effective surface (260), a volume V2 is defined as enclosed by planes P1, P3, P4, P5 and the effective surface (260), a volume V3 is defined as enclosed by planes P2, P3, P4, P6 and the effective surface (260), an average cross sectional area A1 is defined as V1/(DP1+DP2), an average cross sectional area A2 is defined as (V2+V3)/((D3-DP1)+(D3-DP2), and wherein A1 is less than A2.

2. The cooling fan assembly of claim 1, wherein A1 is less than or equal to 0.95A2.

3. The cooling fan assembly of claim 1, wherein A1 is less than or equal to 0.90A2.

4. The cooling fan assembly of claim 1, wherein A1 is less than or equal to 0.80A2.

5. The cooling fan assembly of claim 1, wherein A1 is less than or equal to 0.70A2.

6. The cooling fan assembly of claim 1, wherein A1 is less than or equal to 0.50A2.

7. The cooling fan assembly of claim 1, wherein the offset distance DP1 is between about 0.125 and about 0.75 of the barrel radius (124; 224).

8. The cooling fan assembly of claim 1, wherein the offset distance DP2 is between about 0.125 and about 0.75 of the barrel radius (124; 224).

9. The cooling fan assembly of claim 1, wherein the point (250) contained within plane P4 located on cross section C and on the plenum body (132; 232; 304) is at least a multiple of 1.1 of the barrel radius (124; 224) from the axis of rotation.

10. The cooling fan assembly of claim 1, wherein the cooling fan assembly includes a second barrel for containing a second fan (302) rotatable about a second axis of rotation, the second barrel concentric with the second axis of rotation (116; 216).

11. The cooling fan assembly of claim 1, wherein D1 is not equal to D2.

12. A fan shroud (100; 200) in combination with a cooling fan assembly, the cooling fan assembly including a fan (110; 210; 300) that is rotatable about an axis of rotation (116; 216) and that defines a downstream direction along the axis of rotation (116; 216), the fan shroud (100; 200) comprising:
a barrel (118; 218; 306) for containing the fan (110; 210; 300), the barrel (118; 218; 306) concentric with the axis of rotation (116; 216), and further including a base portion (122; 222); and
a plenum (130; 230) comprising :
a plenum body (132; 232; 304) extending radially from the base portion (122; 222), the plenum body (132; 232; 304) defining at least one edge (134) of length L1;
a skirt (140; 240) extending proximate the at least one edge (134) of length L1 and substantially parallel to the axis of rotation (116; 216);
**characterized in** the plenum further (130; 230) including:
an interface (142) joining the skirt (140; 240) of length L1 with the plenum body (132), wherein the interface (142) comprises an underside (144) having a transition surface (146) of a length less than length L1.

13. The fan shroud (100; 200) of claim 12, wherein the barrel (118; 218; 306) defines a barrel radius (124; 224), and wherein the transition surface (146) has a length between about 0.25 of the barrel radius (124; 224) and about 1.5 of the barrel radius (124; 224).

14. The fan shroud (100; 200) of claim 12, wherein the underside (144) includes a first segment (148) located on one side of the transition surface (146) and a second segment (150) located on the other side of the transition surface (146), and wherein the transition surface (146) is in the form of a concavity (146a), and further wherein a radius (152) of the concavity (146a) is greater than a radius of both the first segment (148) and the second segment (150).

15. The fan shroud (100; 200) of claim 12, wherein the transition surface (146) is in the form of a linearity (146b).

## Patentansprüche

1. Kühlventilatoranordnung zum Ermöglichen der Wärmeübertragung durch einen Wärmetauscher, wobei die Kühlventilatoranordnung Folgendes umfasst:
einen Ventilator (110; 210; 300), der um eine Drehachse (116; 216) rotieren kann und der entlang der Drehachse (116; 216) eine Stromabwärtsrichtung definiert, wobei der Ventilator (110; 210; 300) stromabwärts des Wärmetauschers angeordnet sein kann, wobei der Ventilator (110; 210; 300) ferner mehrere Ventilatorblätter (112, 212) enthält; und
eine Ventilatorhaube (100; 200), die Folgendes enthält:
einen Zylinder (118; 218; 306), der zur Drehachse (116; 216) konzentrisch ist und die mehreren Ventilatorblätter (112, 212) umgibt, wobei der Zylinder (118; 218; 306) einen Zylinderdurchmesser (124; 224) definiert und einen Basisabschnitt (122; 222) aufweist; und
eine Verteilerkammer (130; 230), die einen Verteilerkammerkörper (132; 232; 304) und mindestens eine Schürze (140; 240) enthält,
**dadurch gekennzeichnet, dass**
der Verteilerkammerkörper (132; 232; 304) mit dem Zylinder (118; 218; 306) verbunden ist und in Stromaufwärtsrichtung gesehen einen im Wesentlichen rechtwinkligen Grundriss aufweist, wobei der Verteilerkammerkörper (132; 232; 304) eine Wirkfläche (260) definiert, die in einem Abstand stromaufwärts vom Basisabschnitt (122; 222) monoton ansteigt, wobei die mindestens eine Schürze (140; 240) sich im Wesentlichen parallel zur Drehachse (116; 216) erstreckt und mit dem Verteilerkammerkörper (132; 232; 304) gekoppelt ist, die mindestens eine Schürze (140; 240) einen im Wesentlichen geradlinigen Stromaufwärtsrand (242) enthält, der ein erstes Ende (136; 236) und ein zweites Ende (138; 238) aufweist, und die Verteilerkammer (130; 230) für die mindestens eine Schürze (140; 240) Folgendes definiert:
einen Querschnitt C, der durch die Drehachse (116; 216) verläuft und zur Schürze (140; 240) senkrecht ist;
einen Abstand D1 zwischen dem Querschnitt C und dem ersten Ende (136; 236) des Stromaufwärtsrands (242) und einen Abstand D2 zwischen dem Querschnitt C und dem zweiten Ende (138; 238) des Stromaufwärtsrands (242);
einen Abstand D3, wobei D3 gleich dem kleineren von D1 und D2 ist oder gleich D1 ist, wenn D1 gleich D2 ist;
eine Ebene P1, die zum Querschnitt C parallel und um einen Versatzabstand DP1, der kleiner als D3 ist, versetzt ist;
eine Ebene P2, die zum Querschnitt C parallel und auf der der Ebene P1 gegenüberliegenden Seite des Querschnitts C um einen Versatzabstand DP2, der kleiner als D3 ist, versetzt ist;
eine Ebene P3, die sowohl zum Querschnitt C als auch zur Drehachse (116; 216) senkrecht ist und einen Punkt auf dem Stromabwärtsrand (242) enthält;
eine Ebene P4, die zur Ebene P3 und zum Querschnitt C senkrecht ist und einen Punkt (250) enthält, der auf dem Querschnitt C und auf dem Verteilerkammerkörper (232) angeordnet ist; eine Ebene P5, die zum Querschnitt C parallel und um einen Versatzabstand, der gleich D3 ist, versetzt ist; und
eine Ebene P6, die zum Querschnitt C parallel und auf der der Ebene P5 gegenüberliegenden Seite des Querschnitts C um einen Versatzabstand, der gleich D3 ist, versetzt ist,
wobei ein Volumen V1 definiert ist als durch die Ebenen P1, P2, P3, P4 und durch die Wirkfläche (260) umschlossen, ein Volumen V2 definiert ist als durch die Ebenen P1, P3, P4, P5 und durch die Wirkfläche (260) umschlossen, ein Volumen V3 definiert ist als durch die Ebenen P2, P3, P4, P6 und durch die Wirkfläche (260) umschlossen, eine durchschnittliche Querschnittsfläche A1 definiert ist als V1/(DP1+DP2), eine durchschnittliche Querschnittsfläche A2 definiert ist als (V2+V3)/((D3-DP1)+(D3-DP2)), und wobei A1 kleiner als A2 ist.

2. Kühlventilatoranordnung nach Anspruch 1, wobei A1 kleiner oder gleich dem 0,95-Fachen von A2 ist.

3. Kühlventilatoranordnung nach Anspruch 1, wobei A1 kleiner oder gleich dem 0,90-Fachen von A2 ist.

4. Kühlventilatoranordnung nach Anspruch 1, wobei A1 kleiner oder gleich dem 0,80-Fachen von A2 ist.

5. Kühlventilatoranordnung nach Anspruch 1, wobei A1 kleiner oder gleich dem 0,70-Fachen von A2 ist.

6. Kühlventilatoranordnung nach Anspruch 1, wobei A1 kleiner oder gleich dem 0,50-Fachen von A2 ist.

7. Kühlventilatoranordnung nach Anspruch 1, wobei der Versatzabstand DP1 in einem Bereich von ungefähr dem 0,125-Fachen bis zu ungefähr dem 0,75-Fachen des Zylinderradius (124; 224) liegt.

8. Kühlventilatoranordnung nach Anspruch 1, wobei der Versatzabstand DP2 in einem Bereich von ungefähr dem 0,125-Fachen bis zu ungefähr dem 0,75-Fachen des Zylinderradius (124; 224) liegt.

9. Kühlventilatoranordnung nach Anspruch 1, wobei der Punkt (250), der in der Ebene P4 enthalten und auf dem Querschnitt C und auf dem Verteilerkammerkörper (132; 232; 304) angeordnet ist, um mindestens ein Mehrfaches des 1,1-Fachen des Zylinderradius (124; 224) von der Drehachse entfernt ist.

10. Kühlventilatoranordnung nach Anspruch 1, wobei die Kühlventilatoranordnung einen zweiten Zylinder zum Aufnehmen eines zweiten Ventilators (302), der um eine zweite Drehachse rotieren kann, enthält, wobei der zweite Zylinder zur zweiten Drehachse (116; 216) konzentrisch ist.

11. Kühlventilatoranordnung nach Anspruch 1, wobei D1 nicht gleich D2 ist.

12. Ventilatorhaube (100; 200) in Kombination mit einer Kühlventilatoranordnung, wobei die Kühlventilatoranordnung einen Ventilator (110, 210; 300) enthält, der um eine Drehachse (116; 216) rotieren kann und der entlang der Drehachse (116; 216) eine Stromabwärtsrichtung definiert, wobei die Ventilatorhaube (100; 200) Folgendes umfasst:
einen Zylinder (118; 218; 306) zum Aufnehmen des Ventilators (110; 210; 300), wobei der Zylinder (118; 218; 306) zur Drehachse (116; 216) konzentrisch ist und ferner einen Basisabschnitt (122; 222) enthält; und eine Verteilerkammer (130; 230), die Folgendes umfasst:
einen Verteilerkammerkörper (132; 232; 304), der sich von dem Basisabschnitt (122; 222) radial erstreckt, wobei der Verteilerkammerkörper (132; 232; 304) mindestens eine Kante (134) der Länge L1 definiert;
eine Schürze (140; 240), die sich in räumlicher Nähe der mindestens einen Kante (134) der Länge L1 und im Wesentlichen parallel zur Drehachse (116; 216) erstreckt;
**dadurch gekennzeichnet, dass** die Verteilerkammer (130; 230) ferner Folgendes enthält:
eine Grenzfläche (142), die die Schürze (140; 240) der Länge L1 mit dem Verteilerkammerkörper (132) verbindet,
wobei die Grenzfläche (142) eine Unterseite (144) umfasst, die eine Übergangsfläche (146) mit einer Länge kleiner als die Länge L1 aufweist.

13. Ventilatorhaube (100; 200) nach Anspruch 12, wobei der Zylinder (118; 218; 306) einen Zylinderradius (124; 224) definiert und wobei die Übergangsfläche (146) eine Länge in einem Bereich von ungefähr dem 0,25-Fachen des Zylinderradius (124; 224) bis zu ungefähr dem 1,5-Fachen des Zylinderradius (124, 224) aufweist.

14. Ventilatorhaube (100; 200) nach Anspruch 12, wobei die Unterseite (144) ein erstes Segment (148), das auf einer Seite der Übergangsfläche (146) angeordnet ist, und ein zweites Segment (150), das auf der anderen Seite der Übergangsfläche (146) angeordnet ist, enthält und wobei die Übergangsfläche (146) die Form einer Konkavität (146a) aufweist und wobei ferner ein Radius (152) der Konkavität (146a) größer als ein Radius sowohl des ersten Segments (148) als auch des zweiten Segments (150) ist.

15. Ventilatorhaube (100; 200) nach Anspruch 12, wobei die Übergangsfläche (146) die Form einer Linearität (146b) aufweist.

## Revendications

1. Ensemble à ventilateur de refroidissement permettant de faciliter le transfert de chaleur au travers d'un échangeur de chaleur, cet ensemble à ventilateur de refroidissement comprenant :
un ventilateur (110, 210, 300) mobile en rotation autour d'un axe de rotation (116, 216) et définissant une direction aval le long de l'axe de rotation (116, 216), le ventilateur (110, 210, 300) pouvant être positionné en aval de l'échangeur de chaleur,
le ventilateur (110, 210, 300) comprenant en outre un ensemble de pales de ventilateur (112, 212), et
une enveloppe de ventilateur (100, 200) comprenant :
un tambour (118, 218, 306) concentrique à l'axe de rotation (116, 216) et entourant l'ensemble de pales du ventilateur (112, 212), ce tambour (118, 218, 306) définissant un rayon de tambour (124, 224) et ayant une partie de base (122, 222), et
un plénum (130, 230) comprenant un corps de plénum (132, 232, 304) et au moins une jupette (140, 240),
**caractérisé en ce que**
le corps de plénum (132, 232, 304) est relié au tambour (118, 218, 306) et a une forme plane essentiellement rectangulaire lorsqu'il est observé vers l'amont, le corps de plénum (132, 232, 304) définissant une surface active (260) augmentant uniformément en s'écartant vers l'amont de la partie de base (122, 222), la jupette (140, 240) s'étendant essentiellement parallèlement à l'axe de rotation (116, 216) et étant reliée au corps de plénum (132, 232, 304), la jupette (140, 240) comprenant un bord amont (242) essentiellement rectiligne ayant une première extrémité (136, 236) et une seconde extrémité (138, 238), et, le plénum (130, 230) définissant pour la jupette (140, 240), une section transversale C passant par l'axe de rotation (116, 216) et perpendiculaire à la jupette (140, 240),
une distance D1 entre la section transversale C et la première extrémité (136, 236) du bord amont (242) et une distance D2 entre la section transversale C et la seconde extrémité (138, 238) du bord amont (242),
une distance D3, la distance D3 étant égale à la plus petite des distances D1 et D2 ou étant égale à la distance D1 si la distance D1 est égale à la distance D2,
un plan P1 parallèle à la section transversale C et décalé par rapport à celle-ci d'une distance de décalage DP1 inférieure à la distance D3,
un plan P2 parallèle à la section transversale C et décalé par rapport à cette section sur le côté de celle-ci opposé au plan P1 d'une distance de décalage DP2 inférieure à la distance D3,
un plan P3 perpendiculaire à la section transversale C et à l'axe de rotation (116, 216) et contenant un point situé sur le bord amont (242),
un plan P4 perpendiculaire au plan P3 et à la section transversale C et contenant un point (250) situé sur la section transversale C et sur le corps de plénum (232),
un plan P5 parallèle à la section transversale C et décalé par rapport à celle-ci d'une distance de décalage égale à la distance D3, et
un plan P6 parallèle à la section transversale C et décalé par rapport à cette section sur le côté de celle-ci opposé au plan P5 d'une distance de décalage égale à la distance D3,
un volume V1 étant défini comme étant délimité par les plans P1, P2, P3 et P4, et la surface active (260), un volume V2 étant défini comme étant délimité par les plans P1, P3, P4, P5 et la surface active (260), un volume V3 étant défini comme étant délimité par les plans P2, P3, P4, P6 et la surface active (260), une surface de section transversale moyenne A1 étant définie comme étant égale à V1/(DP1+DP2), et une surface de section transversale moyenne A2 étant définie comme étant égale à (V2+V3)/((D3-DP1)+(D3-DP2)), et A1 étant inférieur à A2.

2. Ensemble à ventilateur de refroidissement conforme à la revendication 1, dans lequel A1 est inférieur ou égal à 0, 95A2.

3. Ensemble à ventilateur de refroidissement conforme à la revendication 1, dans lequel A1 est inférieur ou égal à 0, 90A2.

4. Ensemble à ventilateur de refroidissement conforme à la revendication 1, dans lequel A1 est inférieur ou égal à 0,80A2.

5. Ensemble à ventilateur de refroidissement conforme à la revendication 1, dans lequel A1 est inférieur ou égal à 0,70A2.

6. Ensemble à ventilateur de refroidissement conforme à la revendication 1, dans lequel A1 est inférieur ou égal à 0,50A2.

7. Ensemble à ventilateur de refroidissement conforme à la revendication 1, dans lequel la distance de décalage DP1 est située entre environ 0,125 fois et environ 0,75 fois le rayon du tambour (124, 224).

8. Ensemble à ventilateur de refroidissement conforme à la revendication 1, dans lequel la distance de décalage DP2 est située entre environ 0,125 fois et environ 0,75 fois le rayon du tambour (124, 224).

9. Ensemble à ventilateur de refroidissement conforme à la revendication 1, dans lequel le point (250) contenu dans le plan P4 situé sur la section transversale C et sur le corps de plénum (132, 232, 304) est au moins un multiple de 1.1 fois le rayon du tambour (124, 224) à partir de l'axe de rotation.

10. Ensemble à ventilateur de refroidissement conforme à la revendication 1, comprenant un second tambour permettant de contenir un second ventilateur (302) mobile en rotation autour d'un second axe de rotation, ce second tambour étant concentrique au second axe de rotation (116, 216).

11. Ensemble à ventilateur de refroidissement conforme à la revendication 1, dans lequel la distance D1 n'est pas égale à la distance D2.

12. Enveloppe de ventilateur (100, 200) combinée à un ensemble à ventilateur de refroidissement, cet ensemble à ventilateur de refroidissement comprenant un ventilateur (110, 210, 300) mobile en rotation autour d'un axe de rotation (116, 216) et définissant une direction aval le long de l'axe de rotation (116, 216), cette enveloppe de ventilateur (100, 200) comprenant :
un tambour (118, 218, 306) destiné à contenir le ventilateur (110, 210, 300), ce tambour (118, 218, 306) étant concentrique à l'axe de rotation (116, 216), et comprenant en outre une partie de base (122, 222), et
un plénum (130, 230) comprenant :
un corps de plénum (132, 232, 304) s'étendant radialement à partir de la partie de base (122, 222), ce corps de plénum (132, 232, 304) définissant au moins un bord (134) de longueur L1,
une jupette (140, 240) s'étendant au voisinage du bord (134) de longueur L1 et essentiellement parallèlement à l'axe de rotation (116, 216),
**caractérisée en ce que**
le plénum (130, 230) comprend en outre
une interface (142) reliant la jupette (140, 240) de longueur L1 avec le corps de plénum (132), cette interface (142) comprenant un côté inférieur (144) ayant une surface de transition (146) ayant une longueur inférieure à la longueur L1.

13. Enveloppe de ventilateur (100, 200) conforme à la revendication 12, dans laquelle le tambour (118, 218, 306) définit un rayon de tambour (124, 224) et la surface de transition (146) a une longueur comprise entre environ 0,25 fois le rayon du tambour (124, 224) et environ 1,5 fois le rayon du tambour (124, 224).

14. Enveloppe de ventilateur (100, 200) conforme à la revendication 12, dans laquelle le côté inférieur (144) comprend un premier segment (148) situé d'un côté de la surface de transition (146) et un second segment (150) situé de l'autre côté de la surface de transition (146), la surface de transition (146) a la forme d'une concavité (146a), et en outre, le rayon (152) de la concavité (146a) est supérieur au rayon du premier segment (148) et du second segment (150).

15. Enveloppe de ventilateur (100, 200) conforme à la revendication 12, dans laquelle la surface de transition (146) est de forme rectiligne (146b).
